# EUROPÄISCHE PATENTSCHRIFT

(11) **EP 2 623 393 B1**
(45) Veröffentlichungstag und Bekanntmachung des Hinweises auf die Patenterteilung: **24.08.2016**
(21) Anmeldenummer: 13151811.0
(22) Anmeldetag: 18.01.2013
(51) Int. Cl.: B62B 3/18, B62B 5/00

(54) **Achsträgervorrichtung für eine Achse eines schwenkbaren Ablageelements an einem Einkaufswagenfahrgestell**
Axle holder device for an axle of a pivoting tray element on a shopping cart chassis
Dispositif de support d'axe d'un élément pivotant sur un châssis de chariot de supermarché

(30) Priorität: 01.02.2012 DE 102012100833
(43) Veröffentlichungstag der Anmeldung: 07.08.2013
(73) Patentinhaber: J.D. Geck GmbH, 58762 Altena (DE)
(72) Erfinder: Kroker, Thomas, 58513 Lüdenscheid (DE)
(74) Vertreter: Tarvenkorn, Oliver

(56) Entgegenhaltungen:
- DE-A1-102008 009 687
- DE-A1-102010 025 079
- DE-U1- 8 234 160
- FR-A1- 2 738 540

## Beschreibung

Die Erfindung betrifft eine Achsträgervorrichtung für eine Achse eines schwenkbaren Ablageelements an einem Einkaufswagenfahrgestell mit den Merkmalen des Oberbegriffs des Anspruchs 1.

Weiterhin betrifft die Erfindung einen Einkaufswagen mit einem Fahrgestell und mit einem Abstellelement, das um eine in einem vorderen Bereich angeordnete, quer verlaufende und horizontale Achse schwenkbar ist, die in einer Achsträgervorrichtung gelagert ist, welche an einer Vorderseite des Fahrgestells angebracht ist.

Eine solche Achsträgervorrichtung ist aus der DE 10 2010 025 079 A1 bekannt. Der Vorteil besteht darin, dass die Achsträgervorrichtung fest mit dem Fahrgestell verbunden ist und eine schwenkbewegliche Lagerung der Achse des Ablageelements bildet. Die schwenkbewegliche Lagerung ist erforderlich, um mehrere Einkaufswagen ineinander stapeln zu können. Die Achsträgervorrichtung kann nachträglich an einem vorhandenen Fahrgestell durch einfaches Einclipsen zweier Befestigungselemente befestigt werden, ohne dass an dem üblicherweise aus Metallrohren und -stäben gebildetem Fahrgestell Laschen oder dergleichen zur Lagerung der Achse angebracht werden müssen. Es ergibt sich somit eine verschleiß- und geräuscharme Lagerung der Achse. Bevorzugt überdeckt die Achsträgervorrichtung einen vorderen Querbügel des Fahrgestells und dient somit zugleich als Stoßfänger, der Beschädigungen an Regalen und dergleichen beim Anprall reduzieren kann und der insbesondere beim Ineinanderstapeln mehrerer Einkaufswagen geräuschdämmend wirkt und Beschädigungen eines voranstehenden Einkaufswagens beim Stapeln vermeidet.

Aus der DE 82 34 160 U1 ist eine Stoßschutzleiste vor einem schwenkbaren Ablageelemente an einem Einkaufswagenfahrgestell bekannt. Die Stoßschutzleiste umfasst ein Trägerprofil, das zumindest in einem Befestigungsbereich einen oberen Steg und einen unteren Steg aufweist, welche mit Abstand zueinander angeordnet sind und eine Kammer bilden, und wenigstens ein Befestigungselement mit wenigstens zwei Zungen, wobei die Zungen an ihren Enden jeweils einen Rastvorsprung aufweisen. Jedoch ist bei dieser Stoßschutzleiste kein Mittelsteg vorhanden und sie wird über die integrierten Stege befestigt, ohne zusätzliche Befestigungsmittel.

Die DE 10 2008 009 687 A1 offenbart eine weitere Stoßschutzleiste, die sogenannte Sicherungsbereiche besitzt. In diesen ist ein oberer und ein unterer Steg vorgesehen, jedoch kein Mittelsteg. Ausnehmungen ermöglichen das Einstecken eines nicht näher beschriebenen Sicherungsstiftes. Ob diese Sicherungsvorrichtung eine dauerhafte und sichere Verbindung ermöglicht, ist nicht erkennbar.

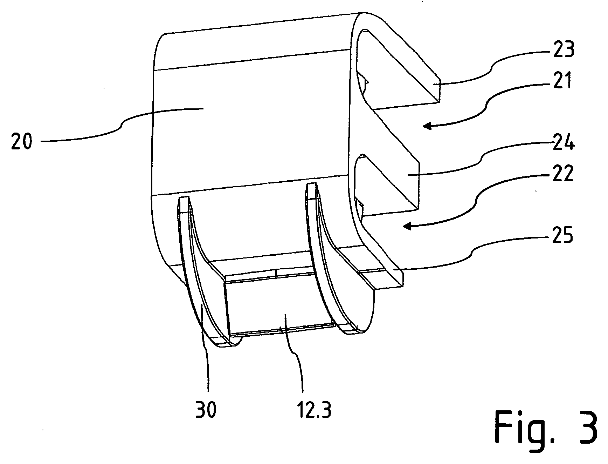

Es hat sich in der Praxis gezeigt, dass die grundsätzlich vorteilhafte Achsträgervorrichtung der bekannten Art Verschleiß unterworfen ist, wenn die Achse nur lose zwischen den Stegen des Trägerprofils und den Zungen des Befestigungselements festgelegt ist, wie insbesondere in Figur 3 der oben genannten Schrift erkennbar. Zugleich ist das Befestigungselement in der bekannten Form nur mit sehr hohen Kräften in das Trägerprofil einpressbar, wodurch das Trägerprofil oder die Zungen des Befestigungselements schon bei der Montage am Fahrgestell beschädigt werden können. Ein weiterer Nachteil besteht darin, dass die Rastvorsprünge unten von der Achsträgervorrichtung abstehen und abgeschert werden können, wenn zum Beispiel der Einkaufswagen auf ein tief liegendes Hindernis wie eine Palette geschoben wird. Auch besteht die Gefahr, dass das Befestigungselement durch Zurückdrücken seiner Rastvorsprünge aus dem Trägerprofil gelöst wird.

Die Aufgabe der vorliegenden Erfindung besteht somit darin, eine einfacher herstellbare und zugleich besser haltbare Steckverbindung an der Achsträgervorrichtung zu ermöglichen und zugleich deren Verschleiß zu mindern. Auch soll die Sicherheit vor einem absichtlichen oder unabsichtlichen Lösen des Befestigungselements erhöht werden.

Diese Aufgabe wird durch eine Achsträgervorrichtung mit den Merkmalen des Anspruchs 1 und durch einen Einkaufswagen mit den Merkmalen des Anspruchs 9 gelöst. Erfindungswesentlich ist die besondere Geometrie der Zungen des Befestigungselements und der zugehörigen Durchgangsöffnungen im Trägerprofil. Diese sind so aufeinander abgestimmt, dass in allen Stadien der Montage die jeweils relativ lang ausgebildeten und mit einer äußeren Auflaufschräge versehenen Enden der Zungen sicher in einer der Durchgangsöffnungen liegen oder schon in die nächst untere Durchgangsöffnung eingefädelt werden, ohne dass der Benutzer die Zungen noch irgendwie manuell verbiegen muss. Bei der Montage legen sich die Zungen zudem um die Achse des Ablageelements herum und bilden zwischen sich einen Aufnahmeraum aus, in welchem die Achse nach Beendigung des Montagevorgangs sicher gelagert ist. Gemäß der Erfindung sind Trägerprofil und Befestigungsclip so aufeinander abgestimmt, dass sie unter Nutzung der elastischen Verformung des Kunststoffs der Zungen die sicher Montage ermöglichen, dass aber der umgekehrte Weg - also Herausziehen des Befestigungselements aus dem Trägerprofil - verwehrt ist. Drückt man die Rastvorsprünge an den Zungen zurück, insbesondere an der langen Zunge, so federn diese allenfalls an derjenigen Öffnung etwas zurück, in der sie eingerastet waren. An der nächst darüberliegenden Öffnung jedoch bleibt die Zunge in der spaltartigen Öffnung geführt, erhält aber nicht genügend Bewegungsraum, als dass die inneren Auflaufschrägen soweit zurückgedrückt werden könnten, um die Achse wieder frei zu geben. Wesentlich ist daher, dass die Zungen im mittleren Steg in separaten Öffnungen geführt sind und nicht in einer gemeinsamen großen Öffnung.

Gemäß der Erfindung ergibt sich als weiterer Vorteil, dass die Achse ausschließlich in dem Aufnahmeraum in dem Befestigungselement gelagert ist, ohne das Trägerprofil selbst zu berühren. Da somit das Trägerprofil nicht durch die Bewegung des Ablageelements mit seiner Achse verschlissen wird, kann es aus einem kostengünstigeren Werkstoff, insbesondere aus einem Massenkunststoff wie Polypropylen hergestellt werden. Hingegen kann für die Befestigungselemente mit ihrer geringen Baugröße und Masse ein hochwertiger technischer Kunststoff vorgesehen werden, der eine hohe Verschleißfestigkeit bietet und der so duktil ist, dass er größere Verformungen während der Montage beschädigungsfrei überstehen kann.

Weitere vorteilhafte Ausgestaltungen der Erfindung sind in den Unteransprüchen enthalten und werden nachfolgend mit Bezug auf das in der Zeichnung dargestellte Ausführungsbeispiel näher erläutert. Die Figuren zeigen im Einzelnen:
- Fig. 1: eine Achsträgervorrichtung in perspektivischer Ansicht;
- Fig. 2a, 2b: ein Befestigungselement in perspektivischer und seitlicher Ansicht;
- Fig. 3: ein Detail von der Unterseite der Achsträgervorrichtung in perspektivischer Ansicht;
- Fig. 4a - 4f: jeweils einen Querschnitt durch einen Befestigungsbereich der Achsträgervorrichtung in verschiedenen Stadien der Montage und
- Fig. 5: einen Einkaufswagen mit Ablageelement in perspektivischer Ansicht.

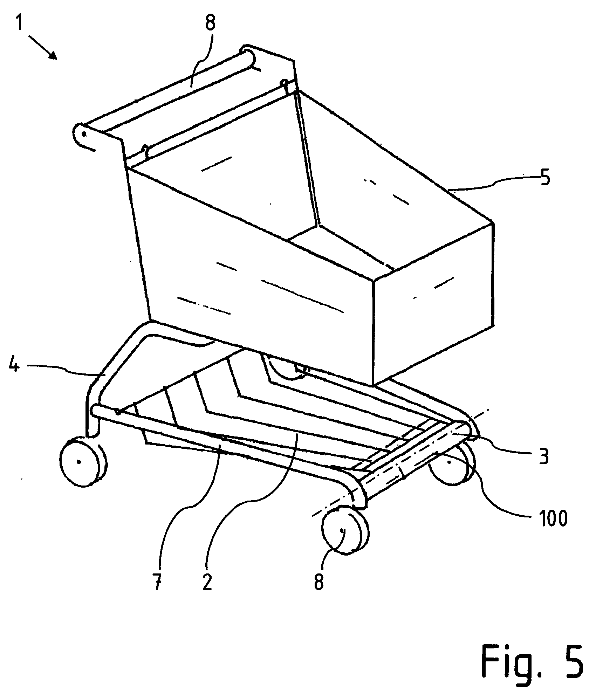

Figur 5 zeigt die Einbaulage einer Achsträgervorrichtung 100 an einem Einkaufswagen 1, der in bekannter Weise ein Fahrgestell 4 und einen Korb 5 mit Schiebebügel 6 umfasst. Das Fahrgestell 4 besitzt Längsträger 7, an deren vorderen Enden Laufrollen 8 angebracht sind. Die Längsträger 7 verlaufen in etwa parallel zur Fahrebene und bilden zugleich einen Auflagepunkt für ein Ablageelement 2 im Bodenbereich, das schwenkbeweglich an einer Achse 3 gelagert ist. Die schwenkbewegliche Lagerung ist erforderlich, um mehrere Einkaufswagen 1 ineinander stapeln zu können. Die Achse 3 des Ablageelements 2 ist innerhalb der Achsträgervorrichtung 100 gelagert.

Im dargestellten Ausführungsbeispiel überdeckt die Achsträgervorrichtung 100 einen vorderen Querbügel des Fahrgestells 4 und dient zugleich als Stoßfänger, der Beschädigungen an Regalen und dergleichen beim Anprall reduzieren kann und der insbesondere beim Ineinanderstapeln mehrerer Einkaufswagen 1 geräuschdämmend wirkt und Beschädigungen eines voranstehenden Einkaufswagens beim Stapeln vermeidet.

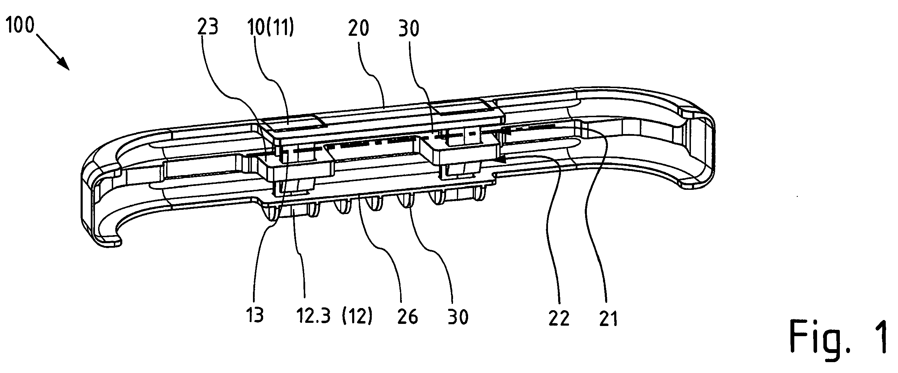

Figur 1 zeigt eine Achsträgervorrichtung 100 in perspektivischer Ansicht von hinten. Diese umfasst ein Trägerprofil 20, welches über zwei Befestigungselemente 10 an dem Fahrgestell 4 des Einkaufswagens 1 befestigt werden kann und dabei zugleich die Achse 3 des Ablageelements 2 einschließt und eine Lagerung dafür bildet.

An dem Trägerprofil 20 sind zwei Befestigungsbereiche ausgebildet, in welchen am Trägerprofil 20 ein oberer Steg 23, ein Mittelsteg 24 und ein unterer Steg 25 vorgesehen sind. Die Stege 24, 25, 26 sind mit Abstand zueinander angeordnet und bilden zwischen sich eine untere Kammer 21 zur Aufnahme des Achse 3 und eine obere Kammer 22 aus, in der ein Teil des Einkaufswagenfahrgestells 4 aufnehmbar ist.

In den Befestigungsbereichen besitzen die Stege 23, 24, 25 Durchgangsöffnungen, in denen die abstehenden Zungen 12, 13 der Befestigungselemente 10 eingesteckt werden können. An ihrer Oberseite besitzen die Befestigungselemente 10 jeweils eine rechteckige Kopfplatte 11, die in einer entsprechenden Vertiefung im oberen Steg 23 flächenbündig aufgenommen wird.

An der Unterseite des Trägerprofils 20 sind Rippen 30 angeformt. Deren Höhe ist, wie insbesondere das Detail Figur 3 zeigt, so gewählt, dass sie zumindest bis auf Höhe der jeweiligen unteren Kante der aus dem unteren Steg 26 herausragenden Rastlasche 12.3 der längeren Zunge 12 des Befestigungselements 10 reichen. Die abgerundete Form der Rippen 30 ermöglicht, dass sich die Achsträgervorrichtung 100 im Kollisionsfall auf einen Gegenstand aufschieben kann, ohne dass die Rastlaschen 12.3 abgeschert werden.

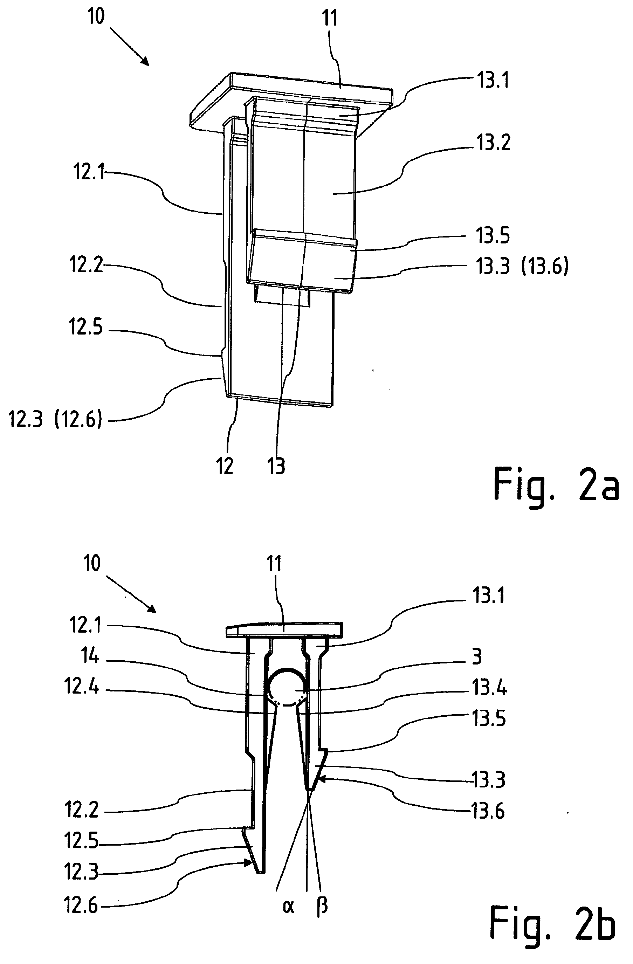

Figur 2a zeigt ein Befestigungselement 10 in perspektivischer Ansicht. Dieses besteht im Wesentlichen aus einer Kopfplatte 11, an welche sich zwei verschieden lange Zungen 12, 13 anschließen. Die Ausbildung der Zungen 12, 13 ist für die Erreichung der erfindungsgemäßen Vorteile wesentlich.

Die längere Zunge 12 besitzt - von oben nach unten gesehen - einen Basisbereich 12.1, einen Federbereich 12.2 mit einer gegenüber dem Basisbereich 12.1 reduzierten Querschnittsbreite und eine spitz ausgebildete Rastlasche 12.3 mit einer relativ lang ausgebildeten und in einem Winkel α von 5° bis 30° angestellten, äußeren Auflaufschräge 12.6, welche an einem Rastvorsprung 12.5 endet.

Die kürzere Zunge besitzt nur einen sehr kurzen Basisbereich 13.1 am Übergang zur Kopfplatte 11. Darunter schließt sich ein Federbereich 13.2 und eine Rastlasche 13.3 ein, die gleichartig zur Rastlasche 12.3 der längeren Zunge 12 ausgebildet ist.

Die seitliche Ansicht des Befestigungselements 10 in Figur 2b zeigt, dass an den jeweiligen Innenseiten der Zungen 12,13 zusätzliche innere Auflaufschrägen 12.4,13.4 ausgebildet sind. Die Auflaufschräge 13.4 erstreckt sich von der Unterkante der kurzen Zunge 13 aus nach oben bis zu dem für die Aufnahme der Achse 3 vorgesehenen Aufnahmeraum 14 und bildet durch Wahl eines entsprechend kleinen Winkels β an der Innenseite der Zunge 13 eine lange Gleitschräge für die Achse 3 aus.

Die Auflaufschräge 12.4 an der längeren Zunge 12 ist spiegelbildlich in Bezug auf die Mittelachse des Befestigungselements 10 ausgebildet und endet somit nicht an der Unterkante der Rastlasche 12.3, sondern auf der gleichen Axialposition wie die Auflaufschräge 13.4 an der kurzen Zunge 13.

Figur 2b zeigt weiterhin die axiale Lage der oben genannten axialen Bereiche an den Zungen 12, 13 zueinander:
- Der Federbereich 13.2 der kurzen Zunge 13 liegt gegenüber dem Basisbereich 12.1 der langen Zunge 12.
- Der Übergang vom Basisbereich 12.1 zum Federbereich 12.2 an der langen Zunge 12 liegt auf Höhe des Rastvorsprungs 13.5 der kurzen Zunge 13.

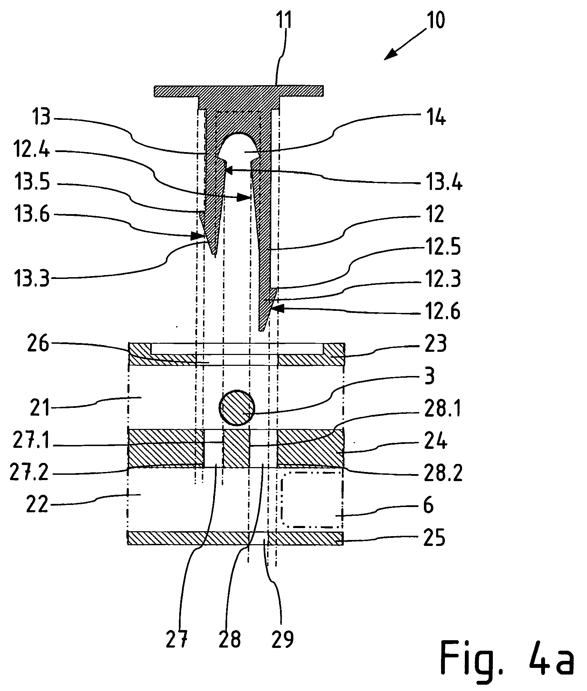

Die Funktion und Montage der erfindungsgemäßen Achsträgervorrichtung wird anhand der in den Figuren 4a bis 4f schematisch dargestellten Montageschritte erläutert.

Gezeigt sind jeweils im Querschnitt die übereinander liegenden Stege 23, 24, 25 mit der zwischen dem oberen Steg 23 und dem Mittelsteg 24 ausgebildeten oberen Kammer 21 und der zwischen dem Mittelsteg 24 und dem unteren Steg 25 ausgebildeten unteren Kammer 22. Der Schnitt liegt in einem der beiden Befestigungsbereiche der Achsträgervorrichtung 100, in welchem die Stege 23, 24, 25 des Trägerprofils 20 jeweils wenigstens eine Durchgangsöffnung 26, 27, 28, 29 zur Aufnahme der Zungen 12, 13 des Befestigungselements 10 besitzen.

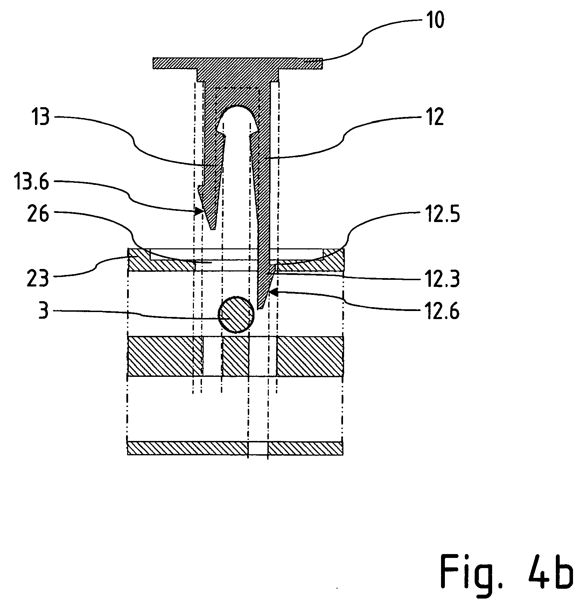

Figur 4a zeigt die Situation zu Beginn der Montage. In der oberen Kammer 21 ist die Achse 3 des Ablageelements eingelegt. In der unteren Kammer 22 ist ein Querbügel 6 des Fahrgestells 4 aufgenommen. Der Querbügel 6 ist nach Beendigung der Montage zwischen der geschlossenen Außenseite des Trägerprofils 20 und der langen Zunge 13 in der unteren Kammer 22 festgelegt. Da die besondere Ausbildung des Befestigungselements 10 jedoch in keinem Bezug zu dem Querbügel 6 steht, ist letzterer in den folgenden Figuren 4b bis 4f nicht mehr dargestellt.

Die strichpunktierten vertikalen Linien in der jeweiligen Mitte der Darstellungen kennzeichnen die Lage der Begrenzungskanten der Durchgangsöffnungen 26, 27, 28, 29 und markanter Punkte an den Zungen 12, 13 des Befestigungselements 10 zueinander.

Dabei bestehen im unbelasteten Zustand, also vor dem Einführen des Befestigungselements 10 in das Trägerprofil 20 und vor dem Aufpressen desselben auf die Achse 3 folgende Beziehungen:
- Die äußeren Begrenzungskanten der Durchgangsöffnung 26 im oberen Steg 23 fluchten mit den Rastvorsprüngen 12.5, 13.5, also den Enden der äußeren Auflaufschrägen 12.6, 13.6.
- Die inneren Begrenzungskanten 27.1, 28.1 der Durchgangsöffnungen 27, 28 im mittleren Steg 24 fluchten mit den Enden der inneren Auflaufschrägen 12.4, 13.4 an den Zungen 12, 13.

"Fluchten" bedeutet im Sinne der vorliegenden Erfindung, dass die angesprochenen Punkte im Wesentlichen auf derselben zur Montagerichtung parallelen Linie liegen. Dabei kann jedoch zwischen den Begrenzungskanten der Durchgangsöffnungen und den Vorsprüngen am Befestigungselement durchaus ein geringfügiges Spiel, also ein leichter Versatz bestehen, so dass die genannten Punkte bei der Montage berührungsfrei aneinander vorbei gleiten. Ebenso kann ein geringfügiges Untermaß bestehen, so dass sich die Punkte beim Fügen der Befestigungselemente berühren und ggf. leicht verformt werden, ohne dass hieraus stärkere Montagekräfte resultieren.

Das bedeutet somit, dass die am Befestigungselement 10 vorstehenden Rastvorsprünge 12.3, 13.3 an den Zungen 12, 13 die genannten Durchgangsöffnungen 27, 28 theoretisch ungehindert passieren können.

Weiterhin gilt, dass die äußere Begrenzungskante 28.2 der Durchgangsöffnung 28 im mittleren Steg 24 für die lange Zunge 12 mit der äußeren Begrenzungskante der Durchgangsöffnung 26 im oberen Steg 23 fluchtet, so dass der Rastvorsprung 12.5 der langen Zunge 12 auch die Durchgangsöffnung 28 im mittleren Steg 24 ungehindert passieren kann.

Schließlich fluchtet die die innere Begrenzungskante 28.1 der Durchgangsöffnung 28 im mittleren Steg 24 für die lange Zunge 12 mit der inneren Begrenzungskante der Durchgangsöffnung 29 im unteren Steg 26, so dass die lange Zunge 12 durchgängig geführt wird. Daraus folgt, dass die Querschnittsbreite der Durchgangsöffnung 28 im mittleren Steg 24 zur Aufnahme der langen Zunge 12 größer als die Dicke der Rastlasche ist und zwar vorzugsweise das 1,2fache bis 2,0fache der Dicke der Rastlasche 12.3 an der langen Zunge 12 betragen sollte, um ein Passieren beim axialen Einstecken, aber auch ein Wegfedern zu ermöglichen, wenn die Zungen 12, 13 durch die zwischen ihnen eingeführte Achse 3 aufgespreizt werden.

Die Querschnittsbreite der Durchgangsöffnung 27 zur Aufnahme der kurzen Zunge 13 in dem mittleren Steg 24 beträgt hingegen vorzugsweise das 1,0fache bis 1,2fache der maximalen Dicke der kurzen Zunge 13 an der Rastlasche 13.3. Die Querschnittsbreite der Durchgangsöffnung 28 zur Aufnahme der langen Zunge 12 in dem unteren Steg 25 beträgt vorzugsweise das 1,0fache bis 1,2fache der Dicke der der Rastlasche 12.4 der langen Zunge 12. Nur dort also, wo die Rastvorsprünge 12.5, 13.5 am Ende der Montage festgelegt sein sollen, ergeben sich reduzierte Querschnittsbreiten an den Durchgangsöffnungen 27, 29.

Wenn nun die Montage beginnt, so taucht - wie in Figur 4b dargestellt - zunächst das untere Ende der langen Zunge 12 durch die obere Durchgangsöffnung 26, ohne dass irgendwelche Verformungen der Zungen 12, 13 erfolgen müssen.

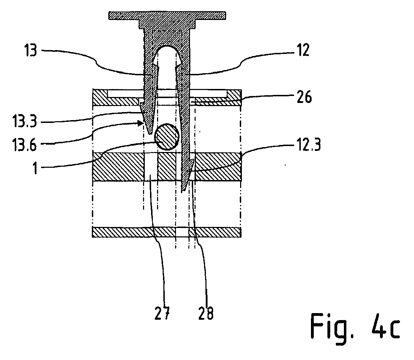

In Figur 4c ist der Rastvorsprung 12.3 der langen Zunge 12 bereits in die Durchgangsöffnung 28 im Mittelsteg 24 eingetaucht. Zugleich passiert der Rastvorsprung 13.3 der kurzen Zunge 13 die obere Durchgangsöffnung 26. Zwischen den Zungen 12, 13 liegt die Achse 3.

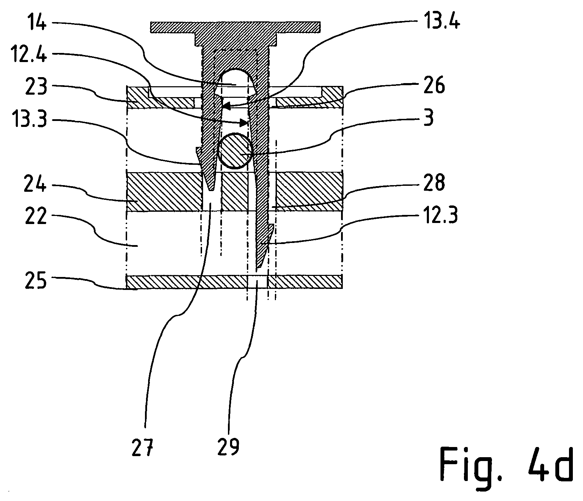

In Figur 4d taucht der Rastvorsprung 13.3 der kurzen Zunge 13 in die mittlere Durchgangsöffnung 27 im mittleren Steg 24 ein, während der der Rastvorsprung 12.3 der langen Zunge 12 schon in der unteren Kammer 22 angekommen ist. Inzwischen berühren die inneren Auflaufschrägen 11.4, 12.4 die Achse 3, so dass die Zungen 12, 13 ab jetzt beim weiteren Herabdrücken des Befestigungselements 10 voneinander abgespreizt werden. Die in Figur 4d gezeigte Konstellation ist wesentlich, denn die Rastlasche 13.3 ist zu dem Zeitpunkt, wo die Aufspreizung der Zungen 12, 13 wegen der eingeführten Achse 3 beginnt, schon in die Durchgangsöffnung 27 eingetaucht und wird durch ihre Auflaufschräge 13.6 weiter dort hinein gedrückt, auch wenn die Zunge 13 im oberen Bereich nach außen wandert. Das gilt ebenso für die lange Zunge 12. Auch sie wird schon in der Durchgangsöffnung 28 geführt und kann dadurch nicht mehr so stark nach außen weichen, dass ein Einfädeln der Rastlasche 12.3 in die Durchgangsöffnung 29 im unteren Steg 25 nicht mehr möglich wäre.

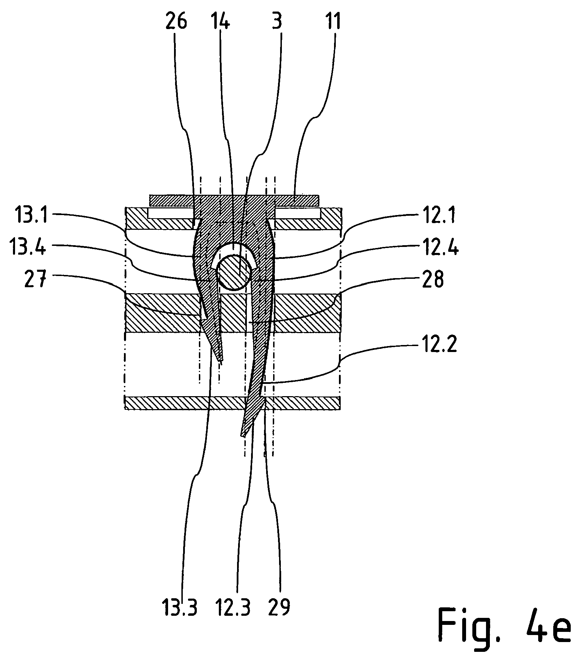

Der wesentliche Punkt der Montage ist in Figur 4e dargestellt. Hier liegt die Achse 3 am Ende der inneren Auflaufschrägen 12.4, 13.4, wodurch die Zungen 12, 13 in dem oberen Längenbereich 12.1, 13.1 maximal gespreizt und verformt werden müssen, damit die Achse 3 die Enden der Auflaufschrägen 12.4, 13.4 passieren und in den Aufnahmeraum 14 eindringen kann.

Trotz der maximalen Spreizung an diesem Punkt läuft der Fügevorgang in Bezug auf die Zungen 12, 13 weiterhin problemlos ab, denn die Breite der Durchgangsöffnung 27 für die kurze Zunge 13 ist so groß, dass sowohl die Rastlasche 13.3 passieren kann wie auch der Federbereich 13.2 darüber, an dessen Innenseite die innere Auflaufschräge 13.4 ausgebildet ist.

Die rechte Durchgangsöffnung 28 für die lange Zunge 12 ist breiter ausgebildet als die linke, da sie ja nicht für die sichere Verrastung am Ende des Montagevorgangs benötigt wird. Gleichwohl ist ihre Breite nicht beliebig groß gewählt, sondern nur so, dass die äußere Begrenzungskante 28.2 noch eine Führung der im oberen Bereich verformten langen Zunge 12 bewirkt. Dadurch kann in einem Stadium, das zwischen den in den Figuren 4d und 4e dargestellten Stadien liegt, die Spitze der Rastlasche 12.3 trotz der bereits eingesetzten massiven Verformung der langen Zunge 12 sicher in die untere Durchgangsöffnung 29 eintauchen, und sie stößt beim weiteren Eindrücken des Befestigungselements 10 in das Trägerprofil 20 gerade nicht gegen den unteren Steg 26.

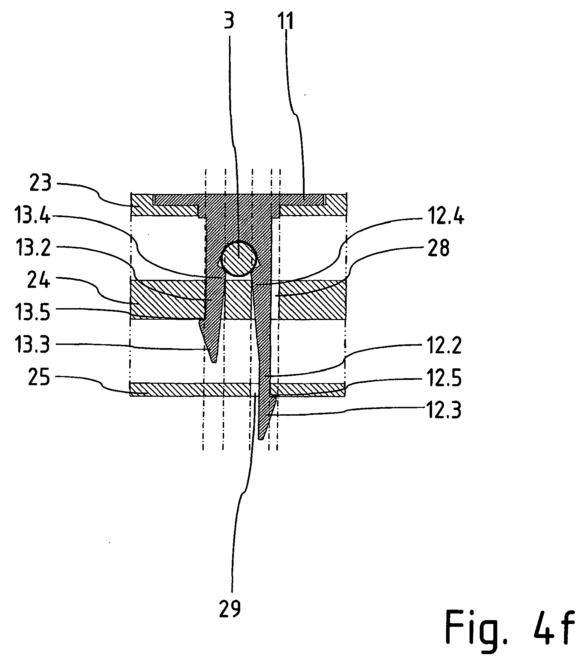

Figur 4f schließlich zeigt die Endlage des Befestigungselements 10, das in das Trägerprofil 20 eingesetzt ist, entsprechend der Situation in Figur 2.

Die Kopfplatte 11 ist flächenbündig versenkt in der rechteckigen Vertiefung aufgenommen, welche die Durchgangsöffnung 26 umgibt.

In dem Aufnahmeraum 14 zwischen den Zungen 12, 13 liegt die Achse 3. Sie ist beweglich, ist aber zwischen den Zungen 12, 13 und den Kanten, die deren innere Auflaufschräge 12.4, 13.4 formschlüssig festgelegt, so dass eine exakte und weitgehend spielfreie Lagerung der Achse bewirkt wird. Die Achse 3 liegt innerhalb der Kammer 21, wird aber nur von dem Befestigungselement 10 gehalten und berührt die benachbarten Stege 24, 25 nicht.

Von der kurzen Zunge 13 ist die Rastlasche 13.3 unter dem Mittelsteg 25 nach außen ausgefedert und damit an der Unterseite des Mittelstegs 25 festgelegt. Die kurze Zunge 13 besitzt am oberen Ende der Durchgangsöffnung 27 eine solche Querschnittsbreite zwischen ihrer Außenseite und der Innenseite mit der Auflaufschräge 12.4, dass sie nahezu spielfrei die Durchgangsöffnung 27 ausfüllt. Das Befestigungselement 10 ist somit an seiner Kopfplatte 11 und an seiner kurzen Zunge 13 exakt festgelegt, so dass es sich im Betrieb nicht verwinden kann.

Die lange Zunge 12 ist mit der Rastlasche 12.3 unter dem unteren Steg 25 nach außen ausgefedert und damit in Längsrichtung ebenfalls festgelegt. Quer dazu besteht jedoch Spiel. An der Durchgangsöffnung 28 im Mittelsteg 24 ist sie mit ihrer äußeren Fläche nicht festgelegt und in der Durchgangsöffnung 29 im unteren Steg 25 nicht mit ihrer Innenseite. Dennoch ist das Befestigungselement 10 schon durch die spielfreie Führung der kurzen Zunge 13 und der Kopfplatte 11 ausreichend festgelegt.

Gerade weil die kurze Zunge die Querschnittsbreite der Durchgangsöffnung 27 in allen Montagestadien weitgehend ausfüllt, ist eine Demontage durch Auslenken der von den Stegen 24, 25 abstehenden Rastlaschen 12.3, 13.3 kaum möglich. Andererseits liegen, wie Figur 1 zeigt, die Zungen 12, 13 offen zugänglich in der oberen Kammer 21. Durch Abtrennen der Zungen 12, 13 kann das Befestigungselement 10 im Reparaturfall gelöst werden. Es wird dann später durch ein neues ersetzt.

## Patentansprüche

1. Achsträgervorrichtung (100) für eine Achse (3) eines schwenkbaren Ablageelements (2) an einem Einkaufswagenfahrgestell (4), wenigstens umfassend
- ein Trägerprofil (20), das zumindest in einem Befestigungsbereich einen oberen Steg (23), einen Mittelsteg (24) und einen unteren Steg (25) aufweist, welche mit Abstand zueinander angeordnet sind und eine untere Kammer (21) und eine obere Kammer (22) bilden, wobei in der einen Kammer (22) ein Teil des Einkaufswagenfahrgestells (4) aufnehmbar ist und in der anderen Kammer (21) die Achse (3) gelagert ist und
- wenigstens ein Befestigungselement (10) mit wenigstens zwei Zungen (12, 13), welche im montierten Zustand des Befestigungselements (10) die Achse (3) zwischen sich einschließen, wobei
- die kurze Zunge (13) durch Durchgangsöffnungen (26, 27) im oberen Steg (23) und im Mittelsteg (24) greift und
- die lange Zunge (12) durch Durchgangsöffnungen (26, 28, 29) im oberen Steg (23), im Mittelsteg (24) und im unteren Steg (25) greift,
und wobei die Zungen (12, 13) an ihren Enden jeweils wenigstens einen Rastvorsprung aufweisen, der im montierten Zustand unter den mittleren Steg (24) bzw. den unteren Steg (25) greift,
**dadurch gekennzeichnet, dass** die Zungen (12, 13) jeweils aufweisen:
- eine Rastlasche (12.3, 13.3) mit einer äußeren Auflaufschräge (12.6, 13.6), welche in einem Winkel von 5° ... 30° in Bezug auf die Mittelachse angestellt ist und an dem Rastvorsprung (12.5, 13.5) endet,
- und eine jeweils an der Innenseite angeordnete innere Auflaufschräge (12.4, 13.4), die sich bis an einen zwischen den Zungen (12, 13) ausgebildeten Aufnahmeraum (14) für die Achse (3) erstreckt.

2. Achsträgervorrichtung (100) nach Anspruch 1, **dadurch gekennzeichnet, dass** im unbelasteten Zustand vor dem Einführen des Befestigungselements (10) in das Trägerprofil (20) und vor dem Aufpressen auf die Achse (3):
- die inneren Begrenzungskanten (27.1, 28.1) der Durchgangsöffnungen (27, 28) im mittleren Steg (24) mit den Enden der inneren Auflaufschrägen (12.4, 13.4) und
- die äußeren Begrenzungskanten der Durchgangsöffnung (26) im oberen Steg (23) mit den Rastvorsprüngen (12.5, 13.5) an den Enden der äußeren Auflaufschrägen (12.6, 13.6)
fluchten.

3. Achsträgervorrichtung (100) nach Anspruch 2, **dadurch gekennzeichnet, dass** von der Durchgangsöffnung (28) im mittleren Steg (24) für die lange Zunge (12):
- die äußere Begrenzungskante (28.2) mit der äußeren Begrenzungskante der Durchgangsöffnung (26) im oberen Steg (23) und
- die innere Begrenzungskante (28.1) mit der inneren Begrenzungskante der Durchgangsöffnung (29) im unteren Steg (26)
fluchtet.

4. Achsträgervorrichtung (100) nach einem der Ansprüche 1 bis 3, **dadurch gekennzeichnet, dass** die Querschnittsbreite der Durchgangsöffnung (27) zur Aufnahme der kurzen Zunge (13) in dem mittleren Steg (24) das 1,0fache bis 1,2fache der maximalen Dicke der kurzen Zunge (13) an der Rastlasche (13.3) beträgt und die Querschnittsbreite der Durchgangsöffnung (28) zur Aufnahme der langen Zunge (12) in dem mittleren Steg (24) das 1,2fache bis 2,0fache der Dicke der Rastlasche (12.3) der langen Zunge (12) beträgt, und
wobei die Querschnittsbreite der Durchgangsöffnung (28) zur Aufnahme der langen Zunge (12) in dem unteren Steg (25) das 1,0fache bis 1,2fache der Dicke der der Rastlasche (12.4) der langen Zunge (12) beträgt.

5. Achsträgervorrichtung (100) nach wenigstens einem der Ansprüche 1 bis 4, **dadurch gekennzeichnet, dass** die Zungen (12, 13) an eine gemeinsame Kopfplatte (11) angeschlossen sind.

6. Achsträgervorrichtung (100) nach Anspruch 5, **gekennzeichnet durch** jeweils einen zwischen der Kopfplatte (11) und der Rastlasche (12.3, 13.3) an den Zungen (12, 13) ausgebildeten Federbereich (12.2, 13.2), welcher eine reduzierte Wandstärke aufweist, wobei der Federbereich (13.2) der kurzen Zunge (13) gegenüber einem sich an die Kopfplatte (11) anschließenden Führungsbereich (12.1) der langen Zunge (12) angeordnet ist.

7. Achsträgervorrichtung (100) nach Anspruch 5 oder 6,
**dadurch gekennzeichnet, dass** mehrere lange und kurze Zungen mit Abstand zueinander an einer gemeinsamen Kopfplatte (11) angeordnet sind.

8. Achsträgervorrichtung (100) nach einem der Ansprüche 1 bis 7, **dadurch gekennzeichnet, dass** bei dem montierten Befestigungselement (10) der Aufnahmeraum (14) mit Abstand zur Oberseite des mittleren Steges (24) und zur Unterseite des oberen Steges (23) angeordnet ist und dass die den Aufnahmeraum (14) begrenzenden Enden der inneren Auflaufschrägen (12.4, 13.4) oberhalb des mittleren Steges (24) positioniert sind.

9. Einkaufswagen (3) mit einem Fahrgestell (4) und mit einem Abstellelement (2), das um eine in einem vorderen Bereich angeordnete, quer verlaufende und horizontale Achse (3) schwenkbar ist, die in einer Achsträgervorrichtung (100) nach wenigstens einem der vorhergehenden Ansprüche gelagert ist, welche Achsträgervorrichtung (100) an einer Vorderseite des Fahrgestells (4) angebracht ist.

## Claims

1. Pin-carrier arrangement (100) for a pin (3) of a pivotable storage element (2) on a shopping-trolley chassis (4), at least comprising
- a carrier profile (20) which, at least in a fastening region, has an upper crosspiece (23), a central crosspiece (24) and a lower crosspiece (25), which are spaced apart from one another and form a lower chamber (21) and an upper chamber (22), wherein part of the shopping-trolley chassis (4) can be accommodated in the one chamber (22) and the pin (3) is mounted in the other chamber (21), and
- at least one fastening element (10) having at least two tongues (12, 13) which, in the installed state of the fastening element (10), enclose the pin (3) between them, wherein
- the short tongue (13) engages through through-openings (26, 27) in the upper crosspiece (23) and in the central crosspiece (24), and
- the long tongue (12) engages through through-openings (26, 28, 29) in the upper crosspiece (23), in the central crosspiece (24) and in the lower crosspiece (25),
and wherein, at their ends, the tongues (12, 13) each have at least one latching protrusion which, in the installed state, engages beneath the central crosspiece (24) and the lower crosspiece (25),
**characterized in that** the tongues (12, 13) each have:
- a latching lug (12.3, 13.3) having an outer run-on slope (12.6, 13.6), which is positioned at an angle of 5° ... 30° in relation to the central axis and terminates at the latching protrusion (12.5, 13.5),
- and an inner run-on slope (12.4, 13.4), which is arranged on the inner side in each case and extends as far as an accommodating space (14) for the pin (3), said accommodating space being formed between the tongues (12, 13).

2. Pin-carrier arrangement (100) according to Claim 1, **characterized in that** in the unloaded state, prior to the fastening element (10) being introduced into the carrier profile (20) and being pressed onto the pin (3):
- the inner boundary edges (27.1, 28.1) of the through-openings (27, 28) in the central crosspiece (24) are in alignment with the ends of the inner run-on slopes (12.4, 13.4) and
- the outer boundary edges of the through-opening (26) in the upper crosspiece (23) are in alignment with the latching protrusions (12.5, 13.5) at the ends of the outer run-on slopes (12.6, 13.6).

3. Pin-carrier arrangement (100) according to Claim 2, **characterized in that**, of the through-opening (28) in the central crosspiece (24) for the long tongue (12) :
- the outer boundary edge (28.2) is in alignment with the outer boundary edge of the through-opening (26) in the upper crosspiece (23) and
- the inner boundary edge (28.1) is in alignment with the inner boundary edge of the through-opening (29) in the lower crosspiece (26).

4. Pin-carrier arrangement (100) according to one of Claims 1 to 3, **characterized in that** the cross-sectional width of the through-opening (27) for accommodating the short tongue (13) in the central crosspiece (24) is 1.0 times to 1.2 times the maximum thickness of the short tongue (13) on the latching lug (13.3) and the cross-sectional width of the through-opening (28) for accommodating the long tongue (12) in the central crosspiece (24) is 1.2 times to 2.0 times the thickness of the latching lug (12.3) of the long tongue (12), and
wherein the cross-sectional width of the through-opening (28) for accommodating the long tongue (12) in the lower crosspiece (25) is 1.0 times to 1.2 times the thickness of the latching lug (12.4) of the long tongue (12).

5. Pin-carrier arrangement (100) according to at least one of Claims 1 to 4, **characterized in that** the tongues (12, 13) are connected to a common head plate (11).

6. Pin-carrier arrangement (100) according to Claim 5, **characterized by** a respective resilient region (12.2, 13.2), which is formed between the head plate (11) and the latching lug (12.3, 13.3) on the tongues (12, 13) and has a reduced wall thickness, wherein the resilient region (13.2) of the short tongue (13) is arranged opposite a guide region (12.1) of the long tongue (12), said guide region adjoining the head plate (11).

7. Pin-carrier arrangement (100) according to Claim 5 or 6, **characterized in that** a plurality of long and short tongues are spaced apart from one another on a common head plate (11).

8. Pin-carrier arrangement (100) according to one of Claims 1 to 7, **characterized in that**, with the fastening element (10) in the installed state, the accommodating space (14) is arranged at a distance from the upper side of the central crosspiece (24) and from the underside of the upper crosspiece (23), and **in that** those ends of the inner run-on slopes (12.4, 13.4) which bound the accommodating space (14) are positioned above the central crosspiece (24).

9. Shopping trolley (3) having a chassis (4) and having a storage element (2) which can be pivoted about a transversely running and horizontal pin (3), which is arranged in a front region and is mounted in a pin-carrier arrangement (100) according to at least one of the preceding claims, which pin-carrier arrangement (100) is fitted on a front side of the chassis (4).

## Revendications

1. Dispositif de support d'essieu (100) pour un essieu (3) d'un élément de rangement (2) pivotant sur un châssis de caddie (4), comprenant au moins :
- un profilé de support (20) comportant au moins un étai supérieur (23), un étai moyen (24) et un étai inférieur (25) dans une région de fixation, lesdits étais étant disposés à une certaine distance les uns des autres et formant un compartiment inférieur (21) et un compartiment supérieur (22), une partie du châssis de caddie (4) pouvant être logée dans le premier compartiment (22) et l'essieu (3) étant disposé dans l'autre compartiment (21) ;
- au moins un élément de fixation (10) avec au moins deux languettes (12, 13) contenant entre elles l'essieu (3) à l'état monté de l'élément de fixation (10) ;
- la languette courte (13) s'agrippant dans l'étai supérieur (23) et dans l'étai moyen (24) à travers les ouvertures traversantes (26, 27) ; et
- la languette longue (12) s'agrippant dans l'étai supérieur (23), dans l'étai moyen (24) et dans l'étai inférieur (25) à travers les ouvertures traversantes (26, 28, 29) ; et
les languettes (12, 13) comportant au niveau de leurs extrémités respectivement au moins une saillie d'encliquetage s'agrippant, à l'état monté, sous l'étai central (24) et/ou l'étai inférieur (25) ;
**caractérisé en ce que** les languettes (12, 13) comportent respectivement :
- une bride d'encliquetage (12.3, 13.3) avec une rampe oblique (12.6, 13.6) extérieure formant un angle de 5° ... 30° par rapport à l'essieu central et terminant au niveau d'une saillie d'encliquetage (12.5, 13.5) ; et
- une rampe oblique (12.4, 13.4) intérieure respectivement disposée au niveau du côté intérieur s'étendant jusqu'à un espace de logement (14) réalisé entre les languettes (12, 13) et prévu pour l'essieu (3) .

2. Dispositif de support d'essieu (100) selon la revendication 1, **caractérisé en ce qu'**à l'état non sollicité, avant l'introduction de l'élément de fixation (10) dans le profilé de support (20) et avant la compression sur l'essieu (3) :
- les arêtes de délimitation intérieures (27.1, 28.1) des ouvertures traversantes (27, 28) sont alignées dans l'étai central (24) avec les extrémités de la rampe oblique (12.4, 13.4) intérieure ; et
- les arêtes de délimitation extérieures de l'ouverture traversante (26) sont alignées dans l'étai supérieur (23) avec les saillies d'encliquetage (12.5, 13.5) au niveau des extrémités de la rampe oblique (12.6, 13.6) extérieure.

3. Dispositif de support d'essieu (100) selon la revendication 2, **caractérisé en ce qu'**à partir de l'ouverture traversante (28) pratiquée dans l'étai central (24) prévu pour la languette longue (12) :
- l'arête de délimitation extérieure (28.2) est alignée avec l'arête de délimitation extérieure de l'ouverture traversante (26) dans l'étai supérieur (23) ; et
- l'arête de délimitation (28.1) intérieure est alignée avec l'arête de délimitation intérieure de l'ouverture traversante (29) dans l'étai inférieur (26).

4. Dispositif de support d'essieu (100) selon l'une quelconque des revendications 1 à 3, **caractérisé en ce que** la largeur de section transversale de l'ouverture traversante (27) servant à recevoir la languette courte (13) dans l'étai central (24) fait 1,0 fois à 1,2 fois l'épaisseur maximale de la languette courte (13) au niveau de la bride d'encliquetage (13.3) et que la largeur de section transversale de l'ouverture traversante (28) servant à recevoir la languette longue (12) dans l'étai central (24) fait 1,2 fois à 2,0 fois l'épaisseur de la bride d'encliquetage (12.3) de la languette longue (12) ; et
la largeur de section transversale de l'ouverture traversante (28) servant à recevoir la languette longue (12) dans l'étai inférieur (25) faisant 1,0 fois à 1,2 fois l'épaisseur de la bride d'encliquetage (12.4) de la languette (12) longue.

5. Dispositif de support d'essieu (100) selon au moins l'une quelconque des revendications 1 à 4, **caractérisé en ce que** les languettes (12, 13) sont rattachées à une plaque de tête (11) commune.

6. Dispositif de support d'essieu (100) selon la revendication 5, **caractérisé par** respectivement une zone de ressort (12.2, 13.2) réalisée entre la plaque de tête (11) et la bride d'encliquetage (12.3, 13.3) au niveau des languettes (12, 13), ladite zone comportant une épaisseur de paroi réduite, la zone de ressort (13.2) de la languette courte (13) étant disposée par rapport à une zone de guidage (12.1), connexe à la plaque de tête (11), de la languette longue (12).

7. Dispositif de support d'essieu (100) selon la revendication 5 ou 6, **caractérisé en ce que** plusieurs languettes courtes et longues sont disposées à une certaine distance les unes des autres au niveau d'une plaque de tête (11) commune.

8. Dispositif de support d'essieu (100) selon l'une quelconque des revendications 1 à 7, **caractérisé en ce qu'**en présence d'un élément de fixation (10) monté, l'espace de logement (14) est disposé à une certaine distance du côté supérieur de l'étai central (24) et du côté inférieur de l'étai supérieur (23) et que les extrémités délimitant le compartiment de logement (14) de la rampe oblique (12.4, 13.4) intérieure sont positionnés au-dessus de l'étai central (24).

9. Caddie (3) avec un châssis (4) et un élément de rangement (2) pouvant pivoter autour d'un essieu horizontal (3) et s'étendant transversalement, disposée dans une région avant disposée dans un dispositif de support d'essieu (100) selon au moins l'une quelconque des revendications précédentes, ledit dispositif de support d'essieu (100) étant disposé au niveau d'un côté du châssis (4).
